(19) Europäisches Patentamt / European Patent Office / Office européen des brevets

(11) **EP 2 265 924 B1**

(12) **FASCICULE DE BREVET EUROPEEN**

(45) Date de publication et mention
de la délivrance du brevet:
**07.08.2013 Bulletin 2013/32**

(51) Int Cl.:
***G01N 13/02*** *(2006.01)*

(21) Numéro de dépôt: **09730123.8**

(86) Numéro de dépôt international:
**PCT/FR2009/050498**

(22) Date de dépôt: **24.03.2009**

(87) Numéro de publication internationale:
**WO 2009/125119 (15.10.2009 Gazette 2009/42)**

(54) **PROCEDE ET INSTALLATION DE DETERMINATION DE LA TENSION INTERFACIALE ENTRE DEUX LIQUIDES, ET PROCEDE DE CRIBLAGE DE DIFFERENTS LIQUIDES**

VERFAHREN UND EINRICHTUNG ZUR BESTIMMUNG DER GRENZFLÄCHENSPANNUNG ZWISCHEN ZWEI FLÜSSIGKEITEN UND SCREENING-VERFAHREN FÜR VERSCHIEDENE FLÜSSIGKEITEN

METHOD AND FACILITY FOR DETERMINING THE INTERFACIAL TENSION BETWEEN TWO LIQUIDS, AND METHOD OF SCREENING VARIOUS LIQUIDS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **25.03.2008 FR 0801601**

(43) Date de publication de la demande:
**29.12.2010 Bulletin 2010/52**

(73) Titulaires:
• **Rhodia Opérations**
  **93306 Aubervilliers (FR)**
• **Université de Bordeaux I**
  **33400 Talence (FR)**

(72) Inventeurs:
• **COLIN, Annie**
  **F-33000 Bordeaux (FR)**
• **GUILLOT, Pierre**
  **33600 Pessac (FR)**
• **AJDARI, Armand**
  **F-75014 Paris (FR)**

(74) Mandataire: **Grand, Guillaume et al**
  **Cabinet Lavoix**
  **62, rue de Bonnel**
  **69448 Lyon Cedex 03 (FR)**

(56) Documents cités:
**GB-A- 1 317 200    GB-A- 2 408 572**
**US-A- 3 030 802    US-A- 4 874 426**
**US-A- 5 559 284    US-A1- 2003 205 079**

• **GUILLOT, COLIN ET AL: "Stability of a jet in confined pressure-driven biphasic flows at low reynoldy numbers" PHYSICAL REVIEW LETTERS, vol. 99, 2007, XP002504422**
• **UTADA, FERNANDEZ-NIEVES ET AL: "Absolute instability of a liquid jet in a coflowing stream" PHYSICLAL REVIEW LETTER, vol. 100, 11 janvier 2008 (2008-01-11), XP002504423**
• **RONAY ET AL: "Determination of the dynamic surface tension of inks from the capillary instability of jets" 1 août 1978 (1978-08-01), JOURNAL OF COLLOID AND INTERFACE SCIENCE, ACADEMIC PRESS, NEW YORK, NY, US, PAGE(S) 55 - 67 , XP022910204 ISSN: 0021-9797 [extrait le 1978-08-01] pages 55,59-65**
• **MASAYUKI SATO ET AL: "Surface Tension Reduction of Liquid By Applied Electric Field Using Vibrating Jet Method" 1 avril 1998 (1998-04-01), IEEE TRANSACTIONS ON INDUSTRY APPLICATIONS, IEEE SERVICE CENTER, PISCATAWAY, NJ, US , XP011022367 ISSN: 0093-9994 le document en entier**

EP 2 265 924 B1

**EP 2 265 924 B1**

## Description

La présente invention concerne un procédé de détermination de la tension interfaciale dynamique d'un tensioactif entre deux liquides, ainsi qu'un procédé de criblage comprenant un tel procédé de détermination.

Lorsque deux liquides non miscibles sont mis en contact l'un avec l'autre, il est nécessaire d'apporter de l'énergie pour augmenter leur surface de contact. Si cette énergie est faible, l'écoulement de ces deux liquides est réalisé sous la forme de deux jets respectifs. Si on augmente progressivement cette énergie, ces deux liquides finissent par former des gouttes. L'énergie par unité de surface, qu'il convient d'apporter en vue de la formation de telles gouttes; est dénommée la tension interfaciale entre les deux liquides considérés.

La connaissance de cette valeur de tension interfaciale est d'une grande importance, dans de nombreux secteurs technologiques. On citera ainsi, à titre non limitatif, les procédés chimiques, l'impression par jet d'encre, l'atomisation par pulvérisation, les procédés d'émulsification, ainsi que l'extrusion de polymères.

On connaît déjà, dans l'état de la technique, plusieurs procédés permettant de déterminer la valeur de cette tension interfaciale.

Une première solution, dite méthode de la goutte pesée, consiste à recueillir un nombre déterminé de gouttes dans un récipient, à partir d'un capillaire. Par pesage du récipient, on déduit alors le poids moyen de chaque goutte, et on calcule ensuite la tension interfaciale, à partir de la valeur de ce poids, ainsi que du rayon du capillaire utilisé.

Une solution alternative, dite de la goutte tournante, consiste à verser une goutte dans un récipient, puis à la faire tourner sous l'effet de la force centrifuge. A partir de différents paramètres, tels que notamment la forme adoptée par la goutte lors de sa mise en rotation, on déduit la valeur de la tension interfaciale.

Ces solutions connues présentent cependant certains inconvénients. Ainsi, elles se révèlent souvent fastidieuses à mettre en oeuvre. De plus, chaque méthode de détermination est limitée à une gamme de mesures relativement étroite.

A cet égard, la méthode de la goutte pesée s'adresse plus particulièrement à l'étude de liquides présentant de fortes tensions interfaciales, typiquement supérieures à 5 mN/m. En revanche, la méthode de la goutte tournante n'est adaptée qu'à des valeurs très faibles de tensions interfaciales, typiquement inférieures à 0,1 mN/m.

La publication « Stability of a jet in confined pressure-driven biphasic flows at low reynolds numbers» de GUILLOT ET AL (PHYSICAL REVIEW LETTERS, volume 99, 7 septembre 2007) étudie la stabilité d'un jet de liquide dans un autre liquide, en fondant cette étude sur une connaissance a priori de la valeur de la tension de surface entre les liquides. Cette publication divulgue ainsi un procédé dans lequel :

- on fait s'écouler un liquide intérieur dans un organe intérieur, ainsi qu'un liquide extérieur dans un organe extérieur, les organes respectivement intérieur et extérieur étant co-axiaux, et l'organe intérieur débouchant dans le volume interne de l'organe extérieur,
- on fait varier le débit d'au moins un des deux liquides intérieur et extérieur pour passer d'une configuration, dans laquelle le liquide intérieur forme un jet continu dans le liquide extérieur, et une autre configuration, dans laquelle le liquide intérieur forme des gouttes dans une phase porteuse formée par le liquide extérieur.

La publication « Absolute instability of a liquid jet in a coflowing stream» de UTADA ET AL (PHYSICAL REVIEW LETTER, volume 100, 11 janvier 2008) vise également à étudier la stabilité d'un jet de liquide, en utilisant une valeur de tension de surface déterminée au préalable.

La publication « Determination of the dynamic surface tension of inks from the capillary instability of jets » de RONAY ET AL (JOURNAL OF COLLOID AND INTERFACE SCIENCE, ACADEMIC PRESS, volume 66, août 1978) analyse le profil oscillant d'un jet de liquide intérieur dans une phase porteuse formée d'un liquide extérieur.

La publication « Surface tension reduction of liquid by applied electric field using vibrating jet method» de MASAYUKI SATO ET AL (IEEE TRANSACTIONS ON INDUSTRY APPLICATIONS, volume 34, numéro 2, mars-avril 1998) s'intéresse à l'impact d'un champ électrique sur la tension de surface de certains liquides.

Ceci étant précisé, l'invention vise à remédier à ces différents inconvénients. Elle vise en particulier à proposer un procédé permettant de déterminer, de manière fiable et simple, la valeur de tension interfaciale dynamique d'un tensioactif entre deux liquides. Elle vise en outre à proposer un tel procédé, qui puisse être mis en oeuvre pour une vaste gamme de tensions interfaciales. Elle vise enfin à proposer un tel procédé, qui est susceptible de permettre la détermination de la tension interfaciale dynamique pour de nombreux tensioactifs.

A cet effet, elle a pour objet un procédé tel que défini à la revendication 1 D'autres caractéristiques de ce procédé sont spécifiées aux revendications dépendantes 2 à 9.

L'invention a également pour objet un procédé de criblage tel que défini à la revendication 10. D'autres caractéristiques de ce procédé de criblage sont énoncées à la revendication 11.

L'invention est décrite ci-après, en référence aux dessins annexés, donnés uniquement à titre d'exemples non limitatifs, dans lesquels :

La figure 1 est une vue de côté, illustrant une installation permettant la mise en oeuvre d'un procédé de détermination de la tension interfaciale entre deux liquides ;

Les figures 2, 4 et 5 sont des vues de côté, analogues à la figure 1, illustrant différentes étapes de mise en oeuvre de ce procédé ;

La figure 3 est un graphe, illustrant les variations du signal d'une photodiode en fonction du temps,

Les figures 6 et 8 sont des courbes, illustrant différentes valeurs de débits de transition ; et

La figure 7 est un graphe, illustrant la variation de la tension de surface en fonction du temps de formation des gouttes

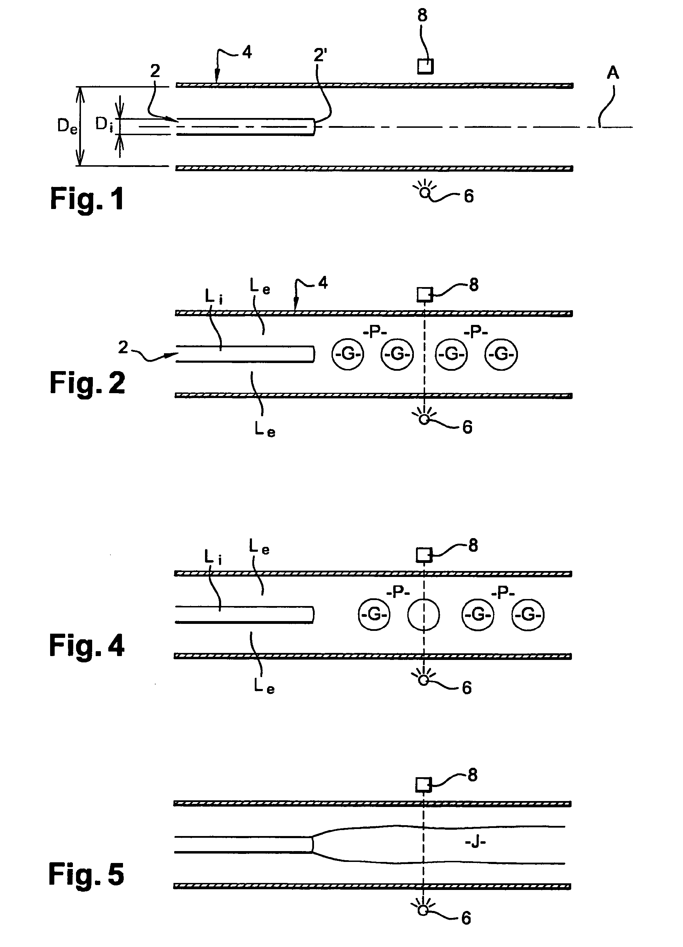

L'installation, qui est illustrée sur la figure 1, comprend deux organes d'écoulement, respectivement intérieur 2 et extérieur 4. Ces organes d'écoulement sont par exemple des capillaires, réalisés notamment en verre, en verre traité, en PTFE, ou encore en matière plastique.

Ces deux capillaires 2 et 4 sont avantageusement coaxiaux, et possèdent ainsi un axe principal commun noté A. On note par ailleurs $D_i$ le diamètre externe du capillaire intérieur 2, à savoir que ce diamètre inclut les parois des capillaires, On note en outre De le diamètre interne du capillaire extérieur 4, à savoir que cette valeur de diamètre n'inclut en revanche pas les parois de ce capillaire 4.

De façon avantageuse, $D_i$ est compris entre 10 microns (ou micromètres) et 2 millimètres, de préférence entre 10 microns et 200 microns, alors que De est compris entre 50 microns et 4 millimètres, de préférence entre 100 microns et 500 microns. En outre, le rapport $D_e/D_i$ est avantageusement compris entre 1.2 et 10, de préférence entre 1.5 et 5.

On note 2' le débouché du capillaire intérieur 2, dans le volume interne du capillaire extérieur 4. Immédiatement en aval de ce débouché 2', il est prévu un émetteur laser 6, d'un premier côté du capillaire 4, qui est associé à une photodiode 8, placée à l'opposé de cet émetteur 6. Comme on le verra dans ce qui suit, cet émetteur et cette photodiode sont susceptibles de délivrer un signal, permettant d'obtenir des informations sur la formation de gouttes ainsi que sur la fréquence de cette formation.

L'installation décrite ci-dessus, en référence à la figure 1, permet la mise en oeuvre d'un procédé visant à déterminer la tension interfaciale entre deux liquides. A cet effet, on met en communication les capillaires 2 et 4 avec des moyens d'amenée de deux liquides non miscibles à tester. Ces moyens d'amenée, qui sont de type classique, ne sont pas représentés sur les figures. De façon habituelle, il peut par exemple s'agir de pousses seringues et de connectiques microfluidiques.

Il s'agit tout d'abord de fixer le débit extérieur; noté $Q_e$ (1), du liquide Le s'écoulant dans le capillaire extérieur. De façon avantageuse, cette valeur de débit extérieur est comprise entre 1 microlitre/heure et 100 m/heure, de préférence entre 10 microlitres/heure et 10000 microlitres/heure. De plus, on confère au débit extérieur, noté $Q_i$, du liquide Li s'écoulant dans le capillaire intérieur, une valeur très faible. Dans ces conditions, la mise en contact de ces deux liquides non miscibles conduit à la formation de gouttes G, constituées par le liquide intérieur, dans une phase porteuse P formée par le liquide extérieur (voir figure 2).

Puis, pour ce même débit extérieur $Q_e(1)$, on augmente progressivement la valeur du débit $Q_i$, selon une fonction $Q_i = f(t)$ prédéterminée en fonction du temps. On observe alors le signal émis par la photodiode, en fonction du temps.

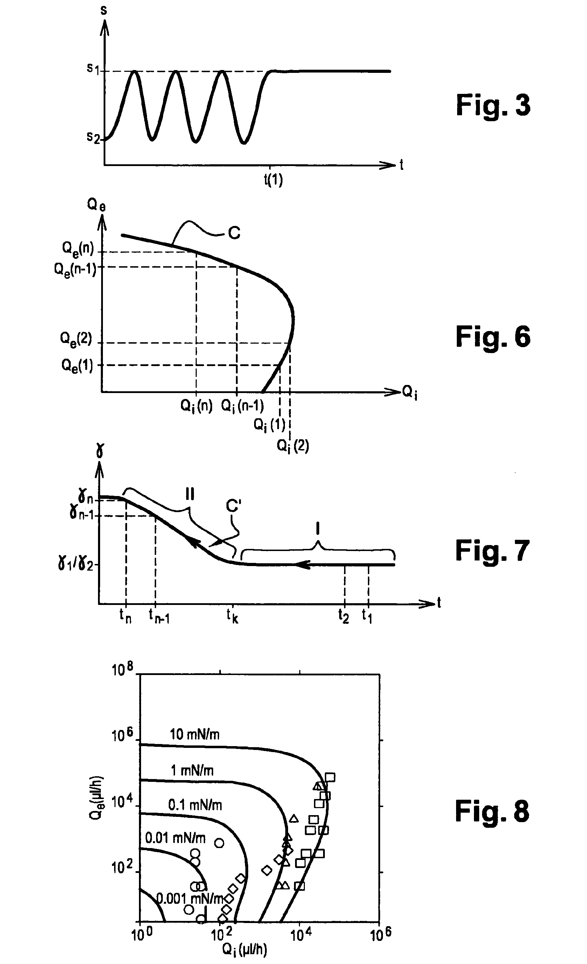

Au début de l'écoulement des deux liquides, correspondant à la formation de gouttes, le signal est périodique, à savoir qu'il oscille entre deux valeurs, respectivement $S_1$ et $S_2$ (voir figure 3). La valeur $S_1$ correspond à la position, dans laquelle le laser et la photodiode sont séparés à la fois par le liquide intérieur et le liquide extérieur (figure 4), alors que le signal $S_2$ correspond à la position, pour laquelle ce laser et cette photodiode sont uniquement séparés par le liquide extérieur (figure 2).

Au-dessus d'une certaine valeur de débit $Q_i$, on note que les gouttes initialement produites sont remplacées par un jet continu J du liquide intérieur dans le liquide extérieur (figure 5). A partir du moment où on a atteint cette valeur seuil, le signal émis par la photodiode se stabilise à la valeur $S_1$, puisque le laser et la photodiode sont en permanence séparés à la fois par le liquide intérieur et par le liquide extérieur.

A partir de la courbe de la figure 3, on identifie l'instant, noté t(1), correspondant à l'apparition du jet continu. Etant donné que, comme vu ci-dessus, la variation de débit $Q_i$ est connue en fonction du temps, on peut accéder à la valeur de débit $Q_i(1)$ correspondant à cet instant t(1) de formation du jet. Connaissant la valeur du débit extérieur $Q_e$ (1), ainsi que la valeur du débit interne $Q_i(1)$ pour laquelle apparaît le jet continu, on peut en déduire la valeur de la tension interfaciale $\gamma(1)$ entre les deux liquides.

A cet effet, on utilise l'équation suivante :

$$Kax^3 E(x,\lambda) = CF(x,\lambda),$$

où

$$C = \frac{5+\sqrt{7}}{18}\sqrt{\frac{24}{\sqrt{7}-1}},$$

$$E(x,\lambda) = -4x + (8 - 4\lambda^{-1})x^3 + 4(\lambda^{-1}-1)x^5,$$

$$F(x,\lambda) = x^4(4 - \lambda^{-1} + 4\ln(x)) + x^6(-8 + 4\lambda^{-1}) +$$
$$x^8(4 - 3\lambda^{-1} - (4 - 4\lambda^{-1})\ln(x)),$$

$$\lambda = \frac{\eta_i}{\eta_e},$$

$$\alpha = \sqrt{(1 + \lambda^{-1}\frac{Qi}{Qe})},$$

et

$$x = \frac{2rj}{De} = \sqrt{\frac{\alpha - 1}{\lambda^{-1} + \alpha - 1}}.$$

La résolution de l'équation (1) ci-dessus permet d'accéder à la valeur de Ka, puis à celle de $\gamma$ en utilisant l'équation suivante :

$$Ka = \frac{\Delta P D_e^2}{\gamma^4},$$

avec

$$\Delta P = \frac{128\eta_e Q_e}{\pi D_e^4 (1 - x^2)}$$

Comme cela ressort de ce qui précède, on peut déduire cette valeur de tension interfaciale en connaissant uniquement les valeurs du débit de liquide extérieur fixé Qe, du débit de liquide intérieur de transition Qi, du diamètre De du capillaire extérieur, ainsi que des viscosités ni et ne des liquides intérieur et extérieur. Cette valeur peut donc être connue de manière simple et rapide.

On peut recommencer l'opération décrite ci-dessus en fixant à chaque fois le débit externe $Q_e$ à des valeurs différentes, notées $Q_e(2)$ à $Q_2(n)$. Ceci permet d'accéder à des valeurs correspondantes de débit interne, notées $Q_i(2)$ à $Q_i(n)$, pour lesquelles s'opère la transition entre les gouttes et le jet. Pour chaque groupe de valeurs $Q_i(j)$ et $Q_e(j)$, où j varie de 1 à n, on peut également déduire <u>n</u> valeurs de tension interfaciales notées $\gamma(1)$ à $\gamma(n)$. Les valeurs de débit intérieur $Q_i$ sont typiquement comprises entre 1 microlitre/heure et 100 ml/heure, notamment entre 10 microlitres/heure et 10000 microlitres/heure.

De plus, sur la figure 6, on a représenté les différentes valeurs de $Q_e$ et de $Q_i$, d'une part fixées, et d'autre part déterminées selon les étapes ci-dessus. La courbe C relie les différentes valeurs de débit intérieures déterminées expérimentalement. Ainsi, à gauche de cette courbe, les valeurs de débit intérieur et extérieur sont telles, que l'écoulement de deux liquides forment des gouttes du liquide intérieur dans le liquide extérieur. En revanche, à droite de cette courbe, cet écoulement conduit à la formation d'un jet continu du liquide intérieur dans le liquide extérieur. L'obtention de cette courbe C est intéressante, car elle permet de vérifier l'incertitude sur la mesure.

A titre de variante, pour un débit extérieur fixé, on peut choisir une valeur initiale de débit intérieur très élevé, telle que la mise en contact des deux liquides conduit à la formation d'un jet. En d'autres termes, on se situe initialement à droite de la courbe C de la figure 6, et non pas à gauche comme dans le premier mode de réalisation.

Puis, on diminue progressivement cette valeur de débit intérieur jusqu'à l'obtention de gouttes. De façon similaire à ce qui a été décrit ci-dessus, le débit intérieur recherché correspond à celui pour lequel on identifie la transition entre jet et gouttes, et non pas entre gouttes et jet comme dans le premier mode de réalisation illustré à la figure 2.

A titre de variante, on peut envisager de fixer, non pas le débit extérieur, mais le débit intérieur de sorte que, dans ce cas, on fait alors varier le débit extérieur. Ceci peut être intéressant pour réduire les erreurs sur les mesures, notamment en réalisant tout d'abord une première série de mesures avec débit extérieur fixé, puis une seconde série avec débit intérieur fixé, pour les mêmes liquides. On peut alors, de façon avantageuse, faire une moyenne des valeurs obtenues lors de ces deux séries de mesures.

Selon une variante avantageuse, on peut réaliser un criblage de différents couples de liquide, en utilisant le procédé de détermination de tension de surface, tel que décrit ci-dessus.

A cet effet, on met en liaison les capillaire d'écoulement 2 et 4 avec des moyens d'ajout d'au moins une substance dans au moins un liquide, et/ou avec des moyens permettant de modifier les conditions de l'écoulement d'au moins un de ces liquides. Les moyens d'ajout permettent d'ajouter; à l'un et/ou l'autre des liquides, différents types de substances telles qu'un tensioactif, un polymère, particules solides, des sels, des acides, ou des bases. Les moyens de modification des conditions d'écoulement sont par exemple susceptibles de faire varier le pH, la température, ou encore la pression.

On prépare ensuite un couple de liquides dits de base, dont on détermine la tension de surface conformément au procédé décrit ci-dessus. Puis, on modifie le couple de base, par ajout d'au moins une substance dans au moins un liquide, et/ou modification d'au moins une condition d'au moins un de ces liquides de base.

On détermine alors les différentes tensions de surface, rotatives aux différents couples de liquide ainsi préparés. Enfin, on détermine un ou plusieurs couples de liquide préférés, par exemple ceux présentant la tension de surface la plus basse.

La figure 7 illustre l'invention : on mesure différentes valeurs de tension interfaciale en fonction de la vitesse de formation des gouttes. Comme on le verra dans ce qui suit, ceci permet de déterminer la vitesse d'adsorption d'un tensioactif à l'interface entre les liquides, à savoir la tension interfaciale dynamique.

On utilise la même installation que celle décrite à la figure 1. Il est cependant à noter qu'on fait s'écouler un agent tensioactif, dont on désire déterminer les propriétés. Ce tensioactif est ajouté, de façon habituelle, à l'un et/ ou l'autre des liquides.

Dans la première étape de cette variante de réalisation, il s'agit de fixer un débit extérieur $Q_e$ à une valeur très basse, notée $Q_e(1)$. De la sorte, ceci permet de s'assurer que le tensioactif a le temps nécessaire de s'adsorber à l'interface entre les deux liquides.

Puis, on fait s'écouler le liquide intérieur à un débit initial très faible, qu'on augmente progressivement selon la procédure décrite ci-dessus. On note $Q_i(1)$, la valeur de débit intérieur, au-delà de laquelle les gouttes se transforment en un jet continu.

On note par ailleurs: $\omega_1$ la fréquence de formation de ces gouttes, qui est très faible du fait de la valeur de débit très basse $Q_e(1)$. Cette fréquence de formation est mesurée par exemple par l'émetteur laser 6, associé à la photodiode 8. Enfin, on calcule selon l'équation (1) ci-dessus la valeur $\gamma 1$ de la tension interfaciale, à partir des valeurs $Q_e(1)$ et $Q_i(1)$ ci-dessus.

Dans une deuxième étape, on fixe le débit extérieur à une valeur $Q_e(2)$ supérieure à celle $Q_e(1)$ ci-dessus. Par conséquent, la fréquence $\omega_2$ de formation des gouttes sera supérieure à celle $\omega_1$, évoquée ci-dessus. Puis, de façon analogue à la première étape, on fait varier le débit $Q_i$, jusqu'à identifier une valeur $Q_i(2)$ correspondant à la transition entre les gouttes et le jet continu. Ceci permet d'obtenir une deuxième valeur de tension interfaciale, notée $\gamma 2$.

On répète ces deux étapes, de façon itérative, pour <u>n</u> valeurs de débit, ce qui permet d'obtenir <u>n</u> valeurs de fréquence de formation de gouttes, ainsi que <u>n</u> valeurs de tension interfaciale.

On trace alors, à la figure 7, la variation de la tension interfaciale $\gamma$ en fonction du temps t de formation des gouttes, qui correspond à l'inverse de la fréquence $\omega$. Sur cette figure, on a représenté les valeurs $t_1$, $t_2$, $t_{n-1}$, $t_n$, ainsi que $\gamma_1$, $\gamma_2$, $\gamma_{n-1}$, $\gamma_n$.

On constate que le courbe C' ainsi obtenue se divise en deux zones principales. On retrouve ainsi une première zone I, correspondant à des temps de formation élevés et par conséquent à des fréquences de production faibles, pour lesquelles la valeur de la tension interfaciale $\gamma$ est sensiblement constante. En d'autres termes, dans cette portion de courbe, les gouttes se forment de façon suffisamment lente, afin de permettre au tensioactif de s'adsorber à l'interface entre les deux liquides.

Puis on retrouve une zone II, correspondant à des fréquences de formation plus élevées, à savoir des temps de formation plus courts. Au fur et à mesure qu'on se rapproche du temps de formation minimal $t_n$, on note une augmentation de la tension interfaciale $\gamma$. En d'autres termes, plus les gouttes se forment à des fréquences élevées, moins le tensioactif a le temps de s'adsorber et, par conséquent, pus la tension interfaciale augmente.

On identifie, à l'intersection entre les zones I et II, un point de transition noté $t_K$ qui correspond au temps caractéristique minimal, nécessaire à l'adsorption du tensioactif à l'interface entre les deux liquides. En d'autres termes, le temps $t_K$ est une valeur caractéristique du tensioactif étudié, en ce sens qu'il correspond à la durée minimale, nécessaire à ce tensioactif pour s'adsorber à l'interface entre les deux liquides.

A partir de cette variante de réalisation, décrite immédiatement ci-dessus, on peut mettre en oeuvre un procédé de criblage de différents agents tensioactifs. A cet effet, on utilise deux liquides non miscibles de base, qu'on fait s'écouler dans les capillaires 2 et 4. Puis, on leur ajoute successivement différents agents tensioactifs, dont on mesure les temps caractéristiques $t_K$, selon les étapes décrites ci-dessus. Le ou les agent(s) tensioactif(s) préféré(s) correspond(ent) en particulier à ceux dont les temps caractéristiques sont inférieurs aux temps caractéristiques de l'application. Typiquement le temps caractéristique pour les additifs de pulvérisation est de l'ordre de la milliseconde, alors que celui des additifs de détergence est de l'ordre de la seconde.

Ce criblage d'agents tensioactifs peut être mis en oeuvre de façon avantageuse, dans de nombreux domaines techniques, tels que les détergents, ou les additifs de pulvérisation. Ainsi, dans le cas des détergents, les deux liquides qu'on fait s'écouler sont par exemple de l'huile et de l'eau, alors que les tensioactifs étudiés sont de la famille des sulphonates, ou des tensioactifs non ioniques.

L'invention permet d'atteindre les objectifs précédemment mentionnés.

En effet, le procédé de détermination de la tension interfaciale, conforme à l'invention, peut être mis en oeuvre de manière simple et rapide. En outre, les différentes étapes qu'il fait intervenir sont susceptibles d'être réalisées de façon automatisée, pour la plupart d'entre elles.

De plus, le procédé de l'invention permet d'accéder à une vaste gamme de valeurs de tension interfacial. En outre, il est possible de faire varier, de manière très rapide, la nature des deux liquides, dont on désire connaître la tension interfaciale.

Enfin, l'installation permettant la mise en oeuvre du procédé ci-dessus, est d'un coût peu élevé. En effet, cette installation fait intervenir un faible nombre de composants, dont la structure est simple.

Ce qui vient d'être décrit va être illustré ci-après, à la lumière de l'exemple de réalisation suivant, donné à titre purement non limitatif:

On utilise deux capillaires coaxiaux, le capillaire extérieur présentant un diamètre de 500 micromètres, alors que le capillaire intérieur présente un diamètre de 300 micromètres. On fait s'écouler, dans les deux capillaires, deux liquides non miscibles, à savoir du dodécane en tant que liquide extérieur, et de l'eau en tant que liquide intérieur. Leurs viscosités respectives sont de $1.29.10^{-3}$ Pa.s et de $1.10^{-3}$ Pa.s.

On fixe différentes valeurs du débit de dodécane, dans le capillaire extérieur, comprises entre 0.001 et 100 microlitres/seconde. Pour chacun de ces débits, on augmente le débit intérieur d'eau, selon le processus décrit ci-dessus. Pour des basses valeurs de débit intérieur, il se forme des gouttes d'eau dans le dodécane puis, au-dessus d'un débit intérieur de transition, ces gouttes se transforment en un jet continu d'eau dans le dodécane.

On en déduit différentes valeurs de débit intérieur de transition, que l'on reporte sur la courbe de la figure 8, ou elles sont représentées par des carrés. On en déduit, selon les équations présentées ci-dessus, des valeurs de tension de surface comprises entre 30 et 50 mN/m.

On recommence le mode opératoire ci-dessus, en ajoutant à l'eau et au dodécane un surfactant noté A, de type ester phosphate commercialisé par la société RHODIA, à raison de 2% en masse. Ceci permet d'obtenir différents points, matérialisés par des triangles. Les valeurs de tension de surface identifiées sont comprises entre 3 et 6 mN/m.

On recommence alors le processus ci-dessus, en changeant la nature du surfactant. On remplace celui A utilisé ci-dessus, par un mélange de 2% en masse de ce même surfactant A, ajouté à 4% en masse de sec-butanol. En mettant en oeuvre le même processus que ci-dessus, on obtient différentes valeurs de débit de transition, matérialisées par des losanges. Les valeurs de tension de surface identifiées sont comprises entre 0.06 et 0.08 mN/m.

Enfin, on recommence la même expérience, en modifiant à nouveau la nature du surfactant. On utilise ainsi un tout d'abord un mélange 50/50 du surfactant A ci-dessus et d'un surfactant noté B, différent de celui A mais de nature analogue. On ajoute 2% en masse de ce mélange, ainsi que 4% en masse de sec-butanol. On accède ainsi à différentes valeurs de débit de transition, matérialisées par des ronds. Les valeurs de tension de surface extraites sont voisines de 0.008 mN/m.

Sur la figure 8, on a représenté, outre les points expérimentaux présentés ci-dessus, les différentes courbes théoriques disponibles dans la littérature. On constate que les points expérimentaux sont relativement proches de ces courbes, ce qui permet de vérifier la cohérence des mesures réalisées. Le cas échéant, on peut ajuster ces courbes expérimentales, pour en déduire une ou plusieurs valeurs de tension de surface.

## Revendications

1. Procédé de détermination de la tension interfaciale dynamique d'un tensioactif entre deux liquides, comprenant les étapes suivantes :

   - on fait s'écouler à la fois un premier liquide, dit liquide intérieur (Li), dans un organe d'écoulement intérieur (2), un second liquide, dit liquide extérieur (Le), dans un organe d'écoulement extérieur (4), ainsi qu'un tensioactif, ajouté à l'un et/ou l'autre des premier et second liquides, les organes d'écoulement respectivement intérieur et extérieur étant coaxiaux, et l'organe intérieur débouchant dans le volume interne de l'organe d'écoulement extérieur ;
   - pour chacune de plusieurs valeurs différentes ($Q_e$(1), $Q_e$(2), ...) du débit, dit extérieur ($Q_e$), du liquide extérieur, on se place tout d'abord dans des conditions telles que, en aval du débouché (2') de l'organe d'écoulement intérieur dans l'organe d'écoulement extérieur, il se forme des gouttes (G) du liquide intérieur dans une phase porteuse (P) formée par le liquide extérieur et on détermine la valeur ($t_1$, $t_2$, ..., $t_n$) du temps de formation de ces gouttes, puis on fait varier le débit, dit intérieur ($Q_i$), du liquide intérieur et, après avoir identifié une valeur ($Q_i$(1),$Q_i$(2), ...), dite de transition, du débit intérieur au-delà de laquelle se forme désormais un jet continu du liquide intérieur dans le liquide extérieur, on en déduit une valeur ($\gamma_1$, $\gamma_2$, ..., $\gamma_n$) de tension interfaciale entre ces deux liquides ; et
   - on réalise une courbe représentant la variation de cette valeur de tension interfaciale en fonction du temps de formation des gouttes, et on identifie un temps caractéristique (tk) du tensioactif, correspondant à la transition entre une première zone (I), où la valeur de tension interfaciale est sensiblement constante en fonction du temps de formation des gouttes, et une deuxième zone (II), où cette valeur de tension interfaciale augmente au fur et à mesure que ce temps de formation diminue.

2. Procédé de détermination selon la revendication 1, **caractérisé en ce que** le diamètre (Di) de l'organe d'écoulement intérieur (2) est compris entre 10 micromètres et 2 millimètres, en particulier entre 10 et 200 micromètres, alors que le diamètre (De) de l'organe d'écoulement extérieur (4) est compris entre 50 micromètres et 4 millimètres, de préférence entre 100 et 500 micromètres.

3. Procédé de détermination selon la revendication 1 ou 2, **caractérisé en ce que** le rapport entre le diamètre de l'organe d'écoulement extérieur et le diamètre de l'organe d'écoulement intérieur est compris entre 1,2 et 10, de préférence entre 1,5 et 5.

4. Procédé de détermination selon l'une quelconque des revendications précédentes, **caractérisé en ce qu'**on fait s'écouler les deux liquides (Li, Le) à des débits (Qi, Qe) compris entre 1 microlitre par heure et 100 ml par heure, de préférence entre 10 et 10 000 microlitres par heure.

5. Procédé de détermination selon l'une des revendications précédentes, **caractérisé en ce que**, pour chacune des valeurs ($Q_e$(1), $Q_a$(2), ...) du débit extérieur ($Q_e$), la valeur ($t_1$, $t_2$, ... $t_n$) du temps de formation des gouttes correspond à la valeur inverse ($\omega_1$, $\omega_2$, ...) de la fréquence ($\omega$) de formation des gouttes, qui est mesurée

6. Procédé de détermination selon l'une des revendications précédentes, **caractérisé en ce qu'**on déduit chaque valeur ($\gamma_1$, $\gamma_2$, ..., $\gamma_n$) de tension interfaciale à partir de la valeur ($Q_e$(1), Qe(2), ...) du débit extérieur ($Q_e$), de la valeur de transition ($Q_i$(1), $Q_i$(2), ...) du débit intérieur ($Q_i$), du diamètre du capillaire extérieur, ainsi que des viscosités des liquides intérieur et extérieur.

7. Procédé de détermination selon la revendication 6, **caractérisé en ce que**, pour déduire chaque valeur de tension interfaciale, on utilise l'équation :

$$Kax^3 E(x,\lambda) = CF(x,\lambda)$$

   où

$$C = \frac{5+\sqrt{7}}{18}\sqrt{\frac{24}{\sqrt{7}-1}},$$

$$E(x,\lambda) = -4x + (8-4\lambda^{-1})x^3 + 4(\lambda^{-1}-1)x^5,$$

$$F(x,\lambda) = x^4(4-\lambda^{-1}+4\ln(x)) + x^6(-8+4\lambda^{-1}) + x^8(4-3\lambda^{-1}-(4-4\lambda^{-1})\ln(x)),$$

$$\lambda = \frac{\eta_i}{\eta_e},$$

$$\alpha = \sqrt{(1+\lambda^{-1}\frac{Qi}{Qe})},$$

$$x = \frac{2rj}{De} = \sqrt{\frac{\alpha-1}{\lambda^{-1}+\alpha-1}},$$

$$Ka = \frac{\Delta P D_e^2}{\gamma^4},$$

*avec*

$$\Delta P = \frac{128\eta_e Q_e}{\pi D_e^4(1-x^2)}$$

8. Procédé de détermination selon l'une quelconque des revendications précédentes, **caractérisé en ce qu'**on identifie l'existence de gouttes (G) en plaçant un émetteur laser (6) et une photodiode (8) de part et d'autre de l'organe d'écoulement extérieur (4), en aval du débouché (2') de l'organe d'écoulement intérieur (2).

9. Procédé suivant les revendications 5 et 8 prises ensemble, **caractérisé en ce que** la fréquence de formation des gouttes (w) est mesurée par l'émetteur laser (6) et la photodiode (8).

10. Procédé de criblage de différents tensioactifs, dans lequel on prépare deux liquides de base non miscibles, en leur ajoutant successivement les différents tensioactifs, on détermine la valeur de tension interfaciale dynamique relative à chacun de ces tensioactifs, selon le procédé conforme à l'une des revendications 1 à 9, et on identifie au moins un tensioactif préféré, parmi lesdits différents tensioactifs, en fonction de son temps caractéristique (tk).

11. Procédé de criblage selon la revendication 10, **caractérisé en ce que** les deux liquides de base sont de l'huile et de l'eau, les tensioactifs criblés étant des sulphonates ou des tensioactifs non ioniques.

**Patentansprüche**

1. Bestimmungsverfahren für die dynamische Grenzflächenspannung eines Tensids zwischen zwei Flüssigkeiten, aufweisend die nachfolgenden Schritte:

   - Man lässt gleichzeitig eine erste Flüssigkeit, genannt innere Flüssigkeit (Li), in ein inneres Durchflusselement (2) fließen, eine zweite Flüssigkeit, genannt äußere Flüssigkeit (Le), in ein äußeres Durchflusselement (4) fließen, sowie ein Tensid, das zu dem einen und/oder dem anderen der ersten und zweiten Flüssigkeit hinzugefügt wird, wobei das innere bzw. das äußere Durchflusselement jeweils koaxial ist und das innere Element in das innere Volumen des äußeren Durchflusselementes mündet;

   - Für jeden von mehreren verschiedenen Werten des Durchflusses ($Q_e(1)$, $Q_e(2)$, ...) der äußeren Flüssigkeit, genannt äußerer Durchfluss ($Q_e$), platziert man zunächst das innere Durchflusselement derart im äußeren Durchflusselement, dass sich Tropfen (G) der inneren Flüssigkeit in einer Trägerphase (P) bilden, welche durch die äußere Flüssigkeit gebildet wird, und man bestimmt den Wert ($t_1$, $t_2$, ..., $t_n$) der Dauer des Tropfenbildens, dann verändert man den Durchfluss der inneren Flüssigkeit, genannt innerer Durchfluss ($Q_i$), und nachdem man einen Wert ($Q_i(1)$, $Q_i(2)$, ...), genannt Übergangswert, für den inneren Durchfluss identifiziert hat, nach dessen Überschreiten sich fortan ein kontinuierlicher Strahl an innerer Flüssigkeit in der äußeren Flüssigkeit bildet, leitet man davon einen Wert ($\gamma_1$, $\gamma_2$, ..., $\gamma_n$) für die Grenzflächenspannung zwischen den zwei Flüssigkeiten ab; und

   - Man realisiert eine Kurve, die die Veränderung der Grenzflächenspannung abhängig von der Dauer des Tropfenbildens repräsentiert, und identifiziert eine charakteristische Zeit ($t_k$) für das Tensid, welche dem Übergang zwischen einer ersten Zone (I), wo der Wert der Grenzflächenspannung abhängig von der Dauer des Tropfenbildens im Wesentlichen konstant ist, und einer zweiten Zone (II), wo der Wert der Grenzflächenspannung in dem Maße zunimmt, wie die Dauer des Bildens sich verringert, entspricht.

2. Bestimmungsverfahren gemäß Anspruch 1, **gekennzeichnet dadurch, dass** der Durchmesser ($D_i$) des inneren Durchflusselements (2) zwischen 10 Mikrometer und 2 Millimeter beträgt, insbesondere zwischen 10 und 200 Mikrometer, wohingegen der Durchmesser ($De$) des äußeren Durchflusselements (4) zwischen 50 Mikrometer und 4 Millimeter beträgt, vorzugsweise zwischen 100 und 500 Mikrometer.

3. Bestimmungsverfahren gemäß Anspruch 1 oder 2, **gekennzeichnet dadurch, dass** das Verhältnis zwischen dem Durchmesser des äußeren Durchflusselements und dem Durchmesser des inneren Durchflusselements zwischen 1,2 und 10, vorzugsweise zwischen 1,5 und 5 beträgt.

4. Bestimmungsverfahren gemäß irgendeinem der vorhergehenden Ansprüche, **gekennzeichnet dadurch, dass** man die beiden Flüssigkeiten (Li, Le) mit Durchflüssen (Qi, Qe) zwischen 1 Mikroliter pro Stunde und 100 ml pro Stunde, vorzugsweise zwischen 10 und 10 000 Mikroliter pro Stunde durchfließen lässt.

5. Bestimmungsverfahren gemäß einem der vorhergehenden Ansprüche, **gekennzeichnet dadurch, dass** für jeden der Werte ($Q_e(1)$, $Q_e(2)$, ...) des äußeren Durchflusses ($Q_e$) der Wert ($t_1$, $t_2$, ..., $t_n$) für die Dauer des Tropfenbildens dem umgekehrten Wert ($\omega_1$, $\omega_2$, ...) der gemessenen Häufigkeit ($\omega$) der Tropfenbildung entspricht.

6. Bestimmungsverfahren gemäß einem der vorhergehenden Ansprüche, **gekennzeichnet dadurch, dass** man jeden Wert ($\gamma_1$, $\gamma_2$, ..., $\gamma_n$) für die Grenzflächenspannung ausgehend von dem Übergangswert ($Q_i(1)$, $Q_i(2)$, ...) für den inneren Durchfluss ($Q_i$), dem Durchmesser der äußeren Kapillare, sowie der Viskosität der inneren und äußeren Flüssigkeit ableiten kann.

7. Bestimmungsverfahren gemäß Anspruch 6, **gekennzeichnet dadurch, dass** man zum Ableiten jedes Grenzflächenspannungswertes die folgende Gleichung verwendet:

$$Kax^3 E(x,\lambda) = CF(x,\lambda)$$

wobei

$$C = \frac{5+\sqrt{7}}{18}\sqrt{\frac{24}{\sqrt{7}-1}},$$

$$E(x,\lambda) = -4x + (8-4\lambda^{-1})x^3 + 4(\lambda^{-1}-1)x^5,$$

$$F(x,\lambda) = x^4(4-\lambda^{-1}+4\ln(x))+x^6(-8+4\lambda^{-1})+ \\ x^8(4-3\lambda^{-1}-(4-4\lambda^{-1})\ln(x)),$$

$$\lambda = \frac{\eta_i}{\eta_e},$$

$$\alpha = \sqrt{(1+\lambda^{-1}\frac{Qi}{Qe})},$$

$$x = \frac{2rj}{De} = \sqrt{\frac{\alpha-1}{\lambda^{-1}+\alpha-1}},$$

$$Ka = \frac{\Delta P D_e^2}{\gamma^4},$$

mit

$$\Delta P = \frac{128\eta_e Q_e}{\pi D_e^4(1-x^2)}$$

**8.** Bestimmungsverfahren gemäß irgendeinem der vorhergehenden Ansprüche, **gekennzeichnet dadurch, dass** man das Vorhandensein von Tropfen (G) durch Platzieren eines Lasersenders (6) und einer Fotodiode (8) beiderseits des äußeren Durchflusselements (4), flussabwärts des Auslasses (2') des inneren Durchflusselements (2) identifiziert.

**9.** Verfahren gemäß den Ansprüchen 5 und 8 zusammengenommen, **gekennzeichnet dadurch, dass** die Tropfenbildungshäufigkeit (ω) durch den Lasersender (6) und die Fotodiode (8) gemessen wird.

**10.** Screening-Verfahren verschiedener Tenside, in dem man zwei nicht mischbare Basisflüssigkeiten bereitstellt, indem man ihnen sukzessive die verschiedenen Tenside zufügt, den dynamischen Grenzflächenspannungswert gemäß dem Verfahren entsprechend einem der Ansprüche 1 bis 9 relativ für jedes der Tenside bestimmt, und man mindestens ein bevorzugtes Tensid unter den verschiedenen Tensiden abhängig von seiner charakteristischen Zeit (tk) identifiziert.

**11.** Screening-Verfahren gemäß Anspruch 10, **gekennzeichnet dadurch, dass** die beiden Basisflüssigkeiten Öl und Wasser sind, wobei die gescreenten Tenside nicht-ionische Sulfone oder Tenside sind.

**Claims**

1. A method for determining the dynamic interfacial tension of a surfactant between two liquids, comprising the following steps:

   - a first liquid, called internal liquid ($L_i$), is made to flow in an internal flow member (2), a second liquid, called external liquid ($L_e$), is made to flow in an external flow member (4), and a surfactant, added to the one and/or the other of the first and second liquids, is also made to flow, the respective internal and external flow members being coaxial and the internal member opening into the internal volume of the external flow member;
   - for each of several different values ($Q_e(1)$, $Q_e(2)$, ...) of the flow rate, called external flow rate, of the external liquid, conditions are firstly set up so that, downstream of the outlet (2') of the internal flow member in the external flow member, droplets (G) of the internal liquid are formed in a carrier phase (P) formed by the external liquid and the value ($t_1$, $t_2$, ..., $t_n$) of the time of formation of these draplets is determined, then the flow rate, called internal flow rate ($Q_i$) is varied, and after having identified a value ($Q_i(1)$, $Q_i(2)$,...), called transition value, of the internal flow rate above which a continuous jet of the internal liquid is then formed in the external liquid, a value ($\gamma_1$, $\gamma_2$,... $\gamma_n$) of the interfacial tension between these two liquids is deduced therefrom; and
   - a curve representing the variation of this interfacial tension value as a function of the droplet formation time is produced and a characteristic time ($t_k$) of the surfactant, corresponding to the transition between a first zone (I) in which the value of the interfacial tension is approximately constant as a function of the droplet formation time and a second zone (II) in which this value of the interfacial tension increases as this formation time decreases, is identified.

2. The method of determination as claimed in claim 1, **characterized in that** the diameter ($D_i$) of the internal flow member (2) is between 10 microns and 2 millimeters, in particular between 10 and 200 microns, whereas the diameter ($D_e$) of the external flow member (4) is between 50 microns and 4 millimeters, preferably between 100 and 500 microns.

3. The method of determination as claimed in claim 1 or 2, **characterized in that** the ratio of the diameter of the external flow member to the diameter of the internal flow member is between 1.2 and 10, preferably between 1.5 and 5.

4. The method of determination as claimed in any one of the preceding claims, **characterized in that** the two liquids ($L_i$, $L_e$) are made to flow with flow rates ($Q_i$, $Q_e$) of between 1 microliter per hour and 100 ml per hour, preferably between 10 and 10 000 microliters per hour.

5. The method of determination as claimed in one of the preceding claims, **characterized in that**, for each of the values ($Q_e(1)$, $Q_e(2)$,...) of the external flow rate ($Q_e$), the value ($t_1$, $t_2$,... tn) of the time of formation of the droplets corresponds to the inverse ($W_1$, $W_2$,...) of the frequence (w) of formation of the droplets, that is measured.

6. The method of determination as claimed in one of the proceding claims, **characterized in that** the value of each interfacial tension value ($\gamma_1$, $\gamma_2$,... $\gamma_n$) is deduced from the value of the external flow rate, from the value of transition of the internal flow rate, from the diameter of the external capillary and from the viscosities of the internal and external liquids.

7. The method of determination as claimed in claim 6, **characterized in that**, to deduce each interfacial tension value, the following equation is used:

$$K\alpha x^3 E(x, \lambda) = CF(x, \lambda)$$

in which

$$C = \frac{5+\sqrt{7}}{18}\sqrt{\frac{24}{\sqrt{7}-1}},$$

$$E(x,\lambda) = -4x + (8 - 4\lambda^{-1})x^3 + 4(\lambda^{-1} - 1)x^5,$$

$$F(x,\lambda) = x^4(4 - \lambda^{-1} + 4\ln(x)) + x^6(-8 + 4\lambda^{-1}) +$$
$$x^8(4 - 3\lambda^{-1} - (4 - 4\lambda^{-1})\ln(x)),$$

$$\lambda = \frac{\eta_i}{\eta_e},$$

$$\alpha = \sqrt{(1 + \lambda^{-1}\frac{Qi}{Qe})},$$

$$x = \frac{2rj}{De} = \sqrt{\frac{\alpha - 1}{\lambda^{-1} + \alpha - 1}},$$

$$Ka = \frac{\Delta P D_e^2}{\gamma^4},$$

with

$$\Delta P = \frac{128\eta_e Q_e}{\pi D_e^4(1 - x^2)}$$

8. The method of determination as claimed in any one of the preceding claims, **characterized in that** the existence of droplets (G) is identified by placing a laser emitter (6) and a photodiode (8) on either side of the external flow member (4), downstream of the outlet (2') of the internal flow member (2).

9. The method as claimed in the claims 5 and 8 taken together, **characterized in that** the frequence (w) of formation of the draplets is measured by the laser emitter (6) and the photodiode (8).

10. A method of screening various surfactants, in which two immiscible base liquids are prepared, with adding thereto in succession the various surfactants, the dynamic interfacial tension value relative to each of these surfactants is determined, using the method as claimed in one of claims 1 to 9, and at least one preferred surfactant is identified from various surfactants according the characteristic time ($t_k$) thereof.

11. The screening method as claimed in claim 10, **characterized in that** the two base liquids are oil and water, the screened surfactants being sulfonates or non-inonic surfactants.

Fig. 1

Fig. 2

Fig. 4

Fig. 5

**Fig. 3**

**Fig. 6**

**Fig. 7**

**Fig. 8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **GUILLOT et al.** Stability of a jet in confined pressure-driven biphasic flows at low reynolds numbers. *PHYSICAL REVIEW LETTERS,* 07 Septembre 2007, vol. 99
- **UTADA E.** Absolute instability of a liquid jet in a coflowing stream. *PHYSICAL REVIEW LETTER,* 11 Janvier 2008, vol. 100
- Determination of the dynamic surface tension of inks from the capillary instability of jets. **RONAY et al.** JOURNAL OF COLLOID AND INTERFACE SCIENCE. ACADEMIC PRESS, Août 1978, vol. 66
- **MASAYUKI SATO et al.** Surface tension reduction of liquid by applied electric field using vibrating jet method. *IEEE TRANSACTIONS ON INDUSTRY APPLICATIONS,* Mars 1998, vol. 34 (2